# EUROPÄISCHE PATENTSCHRIFT

(11) **EP 0 722 600 B1**
(45) Veröffentlichungstag und Bekanntmachung des Hinweises auf die Patenterteilung: **17.12.1997**
(21) Anmeldenummer: 94926931.0
(22) Anmeldetag: 08.09.1994
(51) Int. Cl.: G09B 29/04

(54) **VERFAHREN ZUR DARSTELLUNG VON GRAPHISCHEN AUFZEICHNUNGEN UND DARAUF BERUHENDE GEOGRAPHISCHE KARTE**
METHOD FOR PRESENTING GRAPHIC REPRESENTATIONS AND A GEOGRAPHIC MAP BASED THEREON
PROCEDE DE PRESENTATION DE REPRESENTATIONS GRAPHIQUES ET CARTE GEOGRAPHIQUE FONDEE SUR CE PROCEDE

(30) Priorität: 08.09.1993 DE 4330948
(43) Veröffentlichungstag der Anmeldung: 24.07.1996
(73) Patentinhaber: SPREEPATENT SCHUTZRECHTSVERWERTUNG UND INNOVATIONSTRANSFER GMBH, D-10785 Berlin (DE); Nimz, Uwe, D-13057 Berlin (DE)
(72) Erfinder: NIMZ, Uwe, D-13057 Berlin (DE)
(74) Vertreter: Hengelhaupt, Jürgen, Dipl.-Ing.
(86) Internationale Anmeldenummer: EP9403030
(87) Internationale Veröffentlichungsnummer: WO9507523

(56) Entgegenhaltungen:
- CH-A- 656 353
- DE-B- 1 021 191
- FR-A- 1 282 149
- GB-A- 296 483
- GB-A- 425 788
- GB-A- 2 119 147

## Beschreibung

Die Erfindung betrifft ein Verfahren zur Darstellung von graphischen Aufzeichnungen, Bildern, Landkarten, Tabellen, Netzplänen und sonstigen Schemata in Gesamt-und Detailansicht, sowie eine geographische Karte in Heft- oder Buchform zur Darstellung mindestens einer Übersichtskarte und zugeordneten Detailkarten in Form von Doppelseiten.

Die Erfindung ist insbesondere anwendbar bei der Herstellung von graphisch ausgestalteten Nachschlagewerken, Netzplänen, Karten etc., bei denen es darauf ankommt, von einer flächenmäßigen Darstellung ins Detail zu gehen ohne den Gesamtüberblick zu verlieren und dann intuitiv und schnell von einem zum anderen Detail zu wechseln, ohne wiederum den Gesamtüberblick zu verlieren.

Ein bevorzugtes Anwendungsgebiet der Erfindung ist die Gestaltung von Stadtplänen, Wanderkarten und Autoatlanten.

Die bisher bekannten Stadtpläne, Wanderkarten und Autokarten haben einerseits den Nachteil, wenn sie aus einem großen, auseinanderzufaltenden Bogen bestehen, daß sie unhandlich sind, andererseits wenn sie in Heft-oder Buchform ausgestaltet sind, daß eine Gesamtübersicht fehlt und ein umständliches Blättern und Seiten suchen, insbesondere in Nord- Süd-Richtung unumgänglich ist.

Beispielsweise ist aus der Patentschrift FR 851073 die Einteilung der Karte in eine bestimmte, unbegrenzte Anzahl von horizontalen Zonen bekannt. Diese Zonen werden leporelloartig in eine bestimmte Anzahl vertikaler Falten gelegt. Dieser Karte fehlt die Gesamtübersicht; ein Übergang zu den nördlichen oder südlichen Anschlußausschnitten ist nur über entsprechende Verweise auf den Seiten möglich.

Auch die aus der GB 296483 in Abschnitte unterteilte und auf Kartonpapier aufgezogene Karte bleibt für den Anwender umständlich handhabbar und zeitraubend bei der Suche nach dem entsprechenden Ort. Die bei dieser vorgenannten Karte am Rand angebrachten sogenannten Ösen oder Karteikartenreiter, auf denen eine Information wie eine Zahl oder dergleichen steht, haben lediglich die Aufgabe, die Seitennummerierung oder andere Hinweise, die sonst auf den Kartonabschnitten stehen würden, außerhalb dieser anzubringen und einen Griffpunkt zum Herausziehen der Kartonabschnitte zu schaffen. Die Karte bleibt unübersichtlich.

Die aus der DE-GM 90 14 038 U1 bekannte, zu einem Faltpaket zusammengelegte Karte versucht die Übersichtlichkeit dadurch zu verbessern, daß der Betrachter zunächst einen Überblick durch eine Gesamtkarte sich verschaffen kann, um dann einen bestimmten Teilbereich auseinanderzufalten. Diese Karte ist um so unhandlicher je größer der auseinanderzufaltende Teilbereich ist, außerdem geht die Übersichtlichkeit beim Auseinanderfalten teilweise dadurch verloren, daß die vorherige Gesamtkarte zerstört wird.

Der Erfindung liegt die Aufgabe zugrunde, ein Verfahren zur Darstellung von graphischen Aufzeichnungen, Bildern, Landkarten und sonstigen Schemata in Gesamt- und Detailansicht zu schaffen, welches eine einfache, effektive und übersichtliche Handhabung sowohl der Gesamtansicht als auch der Detailansichten ermöglicht, einen schnellen Wechsel in der Betrachtung von der Gesamtansicht zu der Detailansicht und zurück gewährleistet sowie Möglichkeiten einer rationellen und kostengünstigen Herstellung der Darstellungen bietet.

Es ist weiterhin Aufgabe der Erfindung, eine geographische Karte zu schaffen, welche die eingangs beschriebenen Nachteile vermeidet.

Erfindungsgemäß wird diese Aufgabe durch die Merkmale der Ansprüche 1 und 7 in Verbindung mit den Oberbegriffen der jeweiligen Ansprüche gelöst. Vorteilhafte Ausgestaltungen der Erfindung sind in den Unteransprüchen enthalten.

Der besondere Vorteil der Erfindung besteht darin, daß bei der Betrachtung von graphischen Aufzeichnungen, Bildern, Landkarten und sonstigen Schemata in Gesamt-und Detailansicht ein kurzfristiges und beliebig oft wiederholbares visuelles "Umschalten" von der Gesamtansicht zur jeweiligen Detailansicht möglich ist, indem die Gesamtansicht in einzelne, nebeneinander und/oder übereinander bzw. untereinander angeordnete Abschnitte aufgeteilt ist,
diesen Abschnitten jeweils eine vergrößerte Detailansicht in Form einer Doppelseite zugeordnet ist, wobei die die verkleinerte Detailansicht der Doppelseite darstellenden Abschnitte an der rechten Hälfte der jeweiligen Doppelseite oben und/oder an der linken Hälfte der jeweiligen Doppelseite unten angeordnet sind derart, daß
der jeweilige Abschnitt oben rechts proportional so weit von der vertikalen Mitte der Doppelseite der Detailansicht entfernt ist, wie der Abschnitt von der linken Begrenzung der Gesamtansicht und/oder der jeweilige Abschnitt unten links proportional so weit von der vertikalen Mitte der Doppelseite der Detailansicht entfernt ist, wie der Abschnitt von der rechten Begrenzung der Gesamtansicht.

Eine effektive und reproduzierbar funktionsfähige Handhabung der Darstellung wird dadurch gewährleistet, daß die den horizontal aneinandergrenzenden Abschnitten zugeordnete, als Doppelseiten ausgebildeten Detailansichten einzeln zusammengeklappt und nachfolgend aufeinandergelegt sind und so einen übereinanderliegenden Stapel bilden, wobei die einzelnen Stapel vertikal zueinander versetzt angeordnet sind.

Verschiedene Varianten der Darstellungsform werden möglich, indem die in Abschnitte aufgeteilte Gesamtansicht ganz oder teilweise verzerrt, gestaucht oder perspektivisch dargestellt wird bzw. durch die aus den Abschnitten bestehende Gesamtansicht die Originalverkleinerung der Detailansichten oder lediglich ausgewählte Informationen der Detailansichten dargestellt werden.

Eine hohe Lebensdauer der Darstellung, insbesondere der die Gesamtansicht darstellenden Abschnitte wird durch deren schuppenförmige Ausbildung gewährleistet.

Durch die Erfindung werden weiterhin die beiden Nachteile bisheriger geographischer Karten, nämlich fehlende Gesamtübersicht und umständliches Blättern und Seiten suchen, insbesondere in Nord-Süd-Richtung, bei Anwendungen in Heftform, z.B. Stadtpläne, beseitigt und bei Anwendung in Buchform, z.B. Autoatlas, wesentlich verringert.

Die Erfindung soll nachstehend anhand von Ausführungsbeispielen näher erläutert werden. Es zeigen:
- Fig. 1: die Vorderseite einer zusammengeklappten geographischen Karte;
- Fig. 2: die Rückseite einer zusammengeklappten geographischen Karte;
- Fig. 3: eine aufgeschlagene Doppelseite eines Stadtplans;
- Fig. 4: einen Stadtplan in einer möglichen Herstellungsvariante;
- Fig. 5: einen aufgeschlagenen Buchatlas.

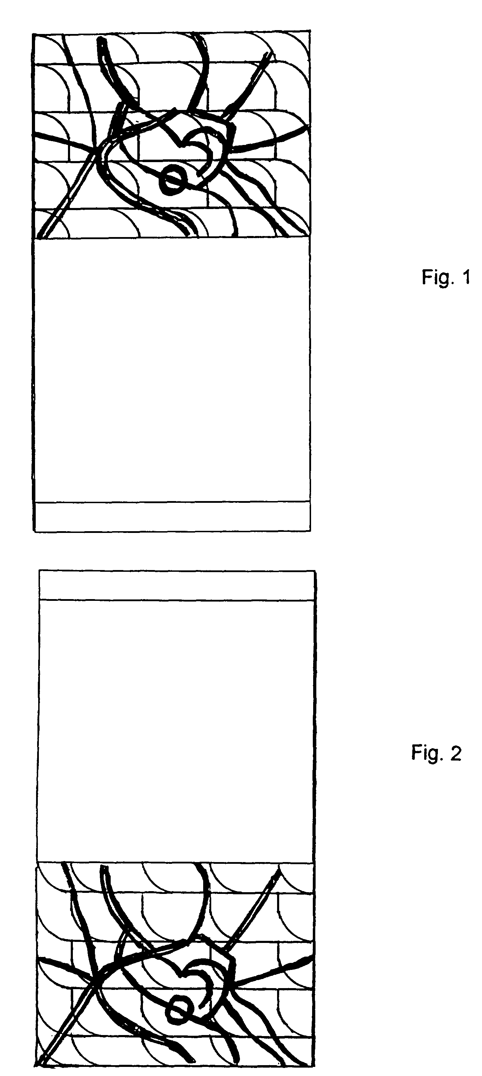

In Fig. 1 ist die Vorderseite einer zusammengeklappten Karte zu sehen. Die obere Hälfte des Heftes setzt sich aus einer Art Karteikartenreiter zusammen, die an den einzelnen Heftseiten angebracht sind und in ihrer Gesamtheit eine kleine Übersichtskarte ergeben und wie eine obere Hälfte des Heftdeckels erscheinen. Die untere Hälfte des Deckels ist wie herkömmlich aus einem Stück gestaltet und bildet gleichzeitig die Rückseite der ersten Heftseite. Jeder Karteikartenreiter ist fest am oberen Rand der rechen Hälfte jeder Doppelseite angebracht. Doppelseiten, die Kartenausschnitte abbilden, die in West-Ost-Richtung aneinandergrenzen, liegen im zusammengeklappten Zustand genau übereinander und bilden jeweils einen Stapel. Die an ihnen angebrachten Karteikartenreiter zeigen in ihrer Gesamtheit einen Querstreifen der Gesamtkarte in verkleinerter Form und zwar genau den, der aus den in West-Ost-Richtung aneinandergrenzenden Abschnitten besteht. Die einzelnen Stapel sind nun zueinander in Heftrückenrichtung so verschoben, daß der jeweils obere Stapel gerade den Blick auf den Querstreifen aus Karteikartenreitern des darunterliegenden Stapels freigibt, so daß sich in der Gesamtheit die verkleinerte Gesamtkarte ergibt.

Die Karteikartenreiter in Fig. 1 sind gegen das Umknikken abgerundet, also schuppenförmig ausgebildet, was der Karte eine größere Haltbarkeit verleiht. Darüber hinaus ist die verkleinerte Gesamtkarte in den Außenbezirken gemäß Anspruch 2 gestaucht dargestellt, was sowohl horizontal als auch vertikal der verkürzte äußere Karteikartenreiter bewirkt und bei unveränderten Außenabmessungen der verkleinerten Gesamtkarte einen größeren Maßstab der Innenbezirke ermöglicht. Wenn alle Heftseiten gleich hoch, die Kartenausschnitte also alle gleich groß sein sollen und die Außenbezirke der Karte gestaucht auf der verkleinerten Gesamtkarte dargestellt werden sollen, ergibt sich am oberen Rand der Vorderseite des Heftes und am unteren Rand der Rückseite jeweils ein vertikal gestauchter Querstreifen mehr als am unteren Rand der Vorderseite und am oberen Rand der Rückseite.

Soll dagegen wie in Fig. 1 bis 3 gezeigt, die Anzahl von gestauchten Querstreifen an den oberen und unteren Rändern gleich sein, so sind die Seitenhöhen entsprechend anzupassen, hier haben beispielsweise die Kartenausschnitte des zu oberst und des zu unterst liegenden Stapels eine größere vertikale Höhe als alle übrigen, die untereinander gleich hoch sind.

Fig. 2 zeigt die zusammengeklappte Karte von hinten. Hier bilden an den Heftseiten unten angebrachte Karteikartenreiter die untere scheinbar vorhandene Hälfte des Heftdeckels und noch einmal die verkleinerte Gesamtkarte.

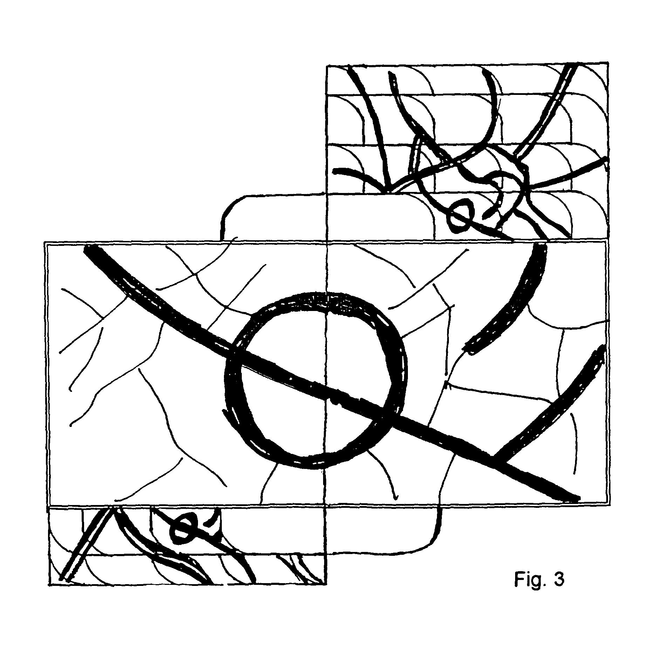

In Fig. 3 ist die Karte, hier ein Stadtplan, aufgeschlagen und zeigt als Beispiel einen Kreisverkehr, der von einer Straße durchkreuzt wird. Derselbe Kreisverkehr ist am unterem Rand der verkleinerten Gesamtkarte rechts oben und am oberen Rand der verkleinerten Gesamtkarte links unten zu sehen. Die verkleinerte Gesamtkarte rechts oben zeigt den Teil der Karte, der sich nördlich und östlich an den Kreisverkehr anschließt und die Gesamtkarte links unten zeigt entsprechend dem sich südlich und westlich anschließenden Teil.

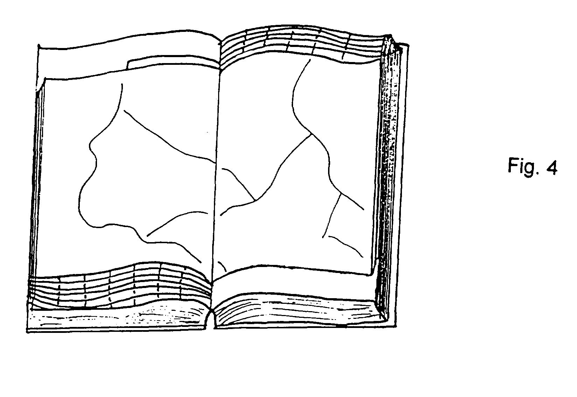

Fig. 4 zeigt die Karte, hier einen Stadtplan, in einer Phase einer möglichen Herstellungsvariante, möglich als eine Art leporelloartig gefalteter, an beiden Seiten mit eckigen Vorsprüngen und Ausbuchtungen versehener Papierschlange, die derart entstanden ist, daß man eine Karte in West-Ost-Richtung (horizontal) in eine gewisse Anzahl, z.B. 5, gleichbreiter Querstreifen zerschneidet, diese an den richtigen Stellen mit einer Art Karteikartenreiter versieht und die Streifen in Folge so hintereinander klebt, daß der jeweils nördlichere Querstreifen zum ehemals angrenzenden südlicheren um die Höhe der Karteikartenreiter nach oben versetzt angeklebt wird. Die so entstandene Papierschlange kann auch gleich durch Bedrucken und Ausstanzen einer etwas breiteren unbedruckten, an beiden Seiten glatten Papierschlange entstehen. Nachdem die bedruckte und ausgestanzte Papierschlange leporelloartig gefaltet wurde, wird sie auf der unbedruckten Rückseite zusammengeklebt, so daß man eine Karte in Heftform erhält. Die Fig. 4 ist räumlich so zu begreifen, daß die von links gezählte senkrechte 1., 3., 5 usw. Kante im Bildhintergrund und die 2., 4. usw. Kante im Bildvordergrund stehen. Wie in Fig. 4 ersichtlich, müssen die an den Doppelseiten angebrachten Karteikartenreiter nicht zwangsläufig als rechteckige Zipfel ausgebildet sein, sondern können sich aus Gründen der Stabilität und Haltbarkeit bis zur Heftmitte, bzw. im noch nicht verklebten Zustand, wie in Fig. 4 gezeigt, bis zu den senkrechten Kanten 3, 5, 7 usw. verlängern, so daß die ursprüngliche rechteckige Zipfelform der Karteikartenreiter nur noch als Aufdruck auf die von der Heftmitte entfernteste Ecke des dann verbreiterten Karteikartenreiters erhalten bleibt.

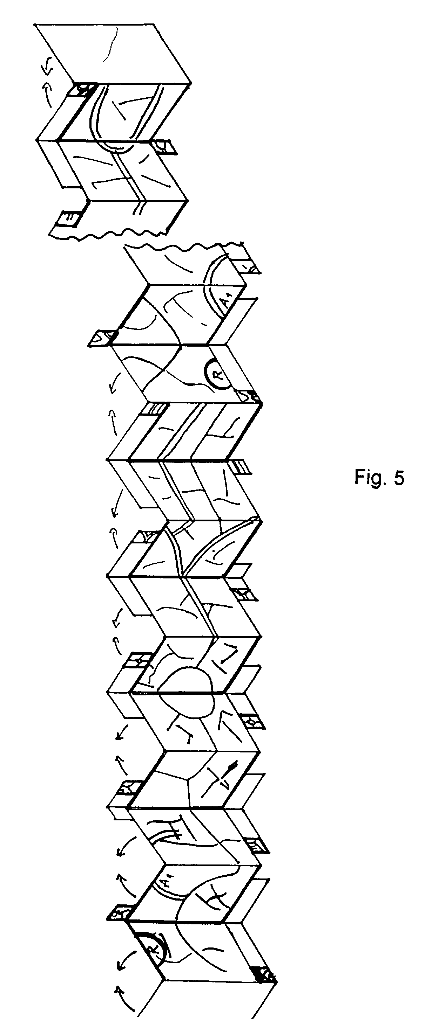

Fig. 5 stellt eine Karte in Form eines aufgeschlagenen Buchatlas dar. Hier wurde auf eine verkleinerte Darstellung der Gesamtkarte auf den Karteikartenreitern verzichtet. Das Prinzip ist dasselbe wie bei der Karte der Fig. 1-4, die Karteikartenreiter dienen jedoch nur zum schnellen Blättern nach Nord (ost,-west) oder Süd (ost, -west) oder zum schnellen Auffinden von Planquadraten aus dem Städteverzeichnis.

Mit dieser Ausführungsform der Erfindung ist es möglich, intuitiv zu blättern, das heißt man geht vom Gesamtüberblick der verkleinerten, auf den Karteikartenreitern dargestellten Gesamtkarte aus, drückt den interessierenden Karteikartenreiter an und schlägt den Plan auf. Ebenso verfährt man, wenn man zu jedem anderen Abschnitt der Karte gelangen möchte, insbesondere auch dann, wenn man zur Anschlußkarte Richtung Osten/Westen oder Norden/Süden möchte. Der Vorteil dabei ist, daß man jederzeit die Gesamtkarte mit im Blick hat, also Hauptstraßen, die den vergrößerten Ausschnitt verlassen, bis zum Zielgebiet weiterverfolgen kann.

Selbstverständlich ist es in Abwandlung der vorliegenden Ausführungsbeispiele möglich, das Heft oder Buch anstelle der beschriebenen linksseitigen Anordnung des Buch- bzw. Heftrückens eine heftrückenhorizontale oder heftrückenrechte Variante mit allen daraus resultierenden Änderungen der Lagebezeichnungen zu wählen.

## Patentansprüche

1. Verfahren zur Darstellung von graphischen Aufzeichnungen, Bildern, Landkarten und sonstigen Schemata in Gesamt-und Detailansicht in Heft- oder Buchform,
dadurch gekennzeichnet,
daß die Gesamtansicht, in einzelne, nebeneinander und/oder übereinander bzw. untereinander angeordnete Abschnitte aufgeteilt wird,
diesen Abschnitten jeweils eine vergrößerte Detailansicht in Form einer Doppelseite zugeordnet wird, wobei
die die verkleinerte Detailansicht der Doppelseite darstellenden Abschnitte an der rechten Hälfte der jeweiligen Doppelseite oben und/oder an der linken Hälfte der jeweiligen Doppelseite unten angeordnet sind derart, daß
der jeweilige Abschnitt oben rechts proportional so weit von der vertikalen Mitte der Doppelseite der Detailansicht entfernt ist, wie der Abschnitt von der linken Begrenzung der Gesamtansicht und/oder der jeweilige Abschnitt unten links proportional so weit von der vertikalen Mitte der Doppelseite der Detailansicht entfernt ist, wie der Abschnitt von der rechten Begrenzung der Gesamtansicht.

2. Verfahren nach Anspruch 1,
dadurch gekennzeichnet,
daß die den horizontal aneinandergrenzenden Abschnitten zugeordneten, als Doppelseite ausgebildeten Detailansichten einzeln zusammengeklappt und nachfolgend aufeinandergelegt werden und so einen Stapel bilden.

3. Verfahren nach Anspruch 1 oder 2,
dadurch gekennzeichnet,
daß die einzelnen Stapel vertikal zueinander versetzt angeordnet werden.

4. Verfahren nach Anspruch 1,
dadurch gekennzeichnet,
daß die in die Abschnitte aufgeteilte Gesamtansicht ganz oder teilweise verzerrt, gestaucht und/oder perspektivisch dargestellt wird.

5. Verfahren nach Anspruch 1 oder 2,
dadurch gekennzeichnet,
daß durch die aus den Abschnitten bestehende Gesamtansicht die Originalverkleinerung der Detailansichten oder lediglich ausgewählte Informationen der Detailansichten dargestellt werden.

6. Verfahren nach einem der Ansprüche 1, 2, 4 oder 5,
dadurch gekennzeichnet,
daß die Abschnitte rechteckig und/oder schuppenförmig und/oder anderweitig geometrisch gestaltet ausgebildet werden.

7. Geographische Karte in Heft- oder Buchform zur Darstellung mindestens einer Übersichtskarte sowie zugeordneten Detailkarten in Form von Doppelseiten,
dadurch gekennzeichnet,
daß an jeder Doppelseite am oberen Rand der rechten Heft- oder Buchseite und/oder am unteren Rand der linken Heft- oder Buchseite jeweils ein in der Art eines Karteikartenreiters ausgebildeter, den Kartenausschnitt dieser Doppelseite in stark verkleinerter Form darstellender Kartenausschnitt angeordnet ist, wobei die in horizontaler Richtung aneinandergrenzenden Kartenausschnitte in der zusammengeklappten Form der Karte genau übereinanderliegend, einen Stapel bildend angeordnet sind und die einzelnen entsprechend der Anzahl der in der Vertikalachse angrenzenden Kartenausschnitte gebildeten Stapel in der Linie des Heft- oder Buchrückens versetzt angeordnet sind und die in der Art von Karteikartenreitern ausgebildeten Kartenausschnitte am rechten oberen Heft- oder Buchrand proportional so weit von der vertikalen Heftmitte entfernt sind, wie der aufgeschlagene Kartenausschnitt, in Form einer Doppelseite, von linken Kartenrand der Gesamtkarte und/oder der karteikartenreiterartig ausgebildete Kartenausschnitt unten links entsprechend proportional so weit von der vertikalen Heftmitte entfernt ist, wie der aufgeschlagene Kartenausschnitt, in Form einer Doppelseite, vom rechten Kartenrand entfernt ist und diese als Kartenkartenreiter ausgebildeten Kartenausschnitte angrenzend versetzt dabei so angeordnet sind, daß diese in der zusammengeklappten Heft- oder Buchform mosaikartig eine verkleinerte Übersichtskarte am oberen vorderen und/oder unteren hinteren Heft- oder Buchrand bilden.

8. Karte nach Anspruch 7,
dadurch gekennzeichnet,
daß die aus den karteikartenreiterartig ausgebildeten Kartenausschnitten zusammengesetzten verkleinerten Übersichtskarten ganz oder teilweise verzerrt, gestaucht oder perspektivisch dargestellt und die karteikartenreiterartigen Kartenausschnitte in ihrer Form entsprechend verändert sind.

9. Karte nach Anspruch 7 oder 8,
dadurch gekennzeichnet,
daß die aus den karteikartenreiterartigen Kartenausschnitten zusammengesetzten Übersichtskarten nicht genaue Verkleinerungen der Originalkarte sind, sondern nur die wichtigsten Informationen zur Groborientierung aufweisen.

10. Karte nach einem der Ansprüche 7 bis 9,
dadurch gekennzeichnet,
daß die karteikartenreiterartigen Kartenausschnitte eine rechteckige, schuppenförmige oder anderweitig gestaltete geometrische Form aufweisen.

11. Karte nach einem der Ansprüche 7 bis 10,
dadurch gekennzeichnet,
daß die Übersichtskarte visueller Bestandteil der Titelseite und/oder der Rückseite des Kartenheftes oder Kartenbuches ist.

## Claims

1. Procedure for representing graphic drawings, illustrations, maps and other diagrams in overall and detail-views in booklet or book form
characterized in that
the overall-view is subdivided into individual sections disposed adjacent to each other and/or above or below each other, and in that an enlarged detail-view in the form of a double-page is assigned to each of these sections
wherein the sections depicting the scaled down double-page detail-view are disposed in the upper right half of each double-page and/or in the lower left half of each double-page in such a way that
each section on the upper right is proportionally spaced as far from the vertical centerline of the detail-view double-page as the section is from the left hand border of the overall-view and/or each section on the lower left is proportionally spaced as far from the vertical centerline of the detail-view double-page as the section is from the right hand border of the overall-view.

2. Procedure according to claim 1
wherein the double-page layout detail-views assigned to the sections bordering each other horizontally can be folded together and consecutively laid on top of one another and thus form a stack.

3. Procedure according to claim 1 or 2
wherein the individual stacks can be disposed vertically staggered relative to each other.

4. Procedure according to claim 1
wherein the overall-view subdivided into the sections is represented completely or partially distorted, compressed and/or in perspective.

5. Procedure according to claim 1 or 2,
wherein the overall-view consisting of the sections represents the original scaled down detail-views or merely selected information of the detail-views.

6. Procedure according to claim 1, 2, 4 or 5,
wherein the sections are rectangular and/or scale shaped and/or in other geometric shapes.

7. Geographical maps in booklet or book form representing at least one survey map as well as assigned detail maps in the form of double-pages
wherein a scaled down representation of the map section of this double-page similar to an index card tab is disposed at the upper edge of the right-hand page of each booklet or book double-page and/or at the lower edge of the left-hand page of each booklet or book double-page, and wherein the map sections bordering on each other in the horizontal direction are exactly disposed above each other in the vertical direction forming a stack in the folded form of the map, and wherein the individual stacks corresponding to the number of map segments bordering on the vertical axis are staggered relative to the line of the booklet or book spine, and wherein the map segments similar to index card tabs at the upper right edge of the booklet or book are proportionally spaced so far from the vertical booklet centerline as the opened map section in the form of a double-page from the left edge of the overall map and/or the map segment similar to the index card tab at the lower left correspondingly proportionally spaced so far from the vertical booklet centerline as the opened map section in the form of a double-page from the right edge of the overall map, and wherein these map segments similar to index card tabs are staggered on their borders such that in the folded booklet or book form these produce a mosaic-like scaled down survey map at the upper front edge and/or lower rear edge of the booklet or book.

8. Map according to claim 7,
wherein the survey maps assembled from the scaled down map segments similar to index card tabs are represented completely or partially distorted, compressed and/or in perspective, and wherein the map segments similar to index card tabs are correspondingly altered in their fonn.

9. Map according to claim 7 or 8,
wherein the survey maps assembled from the scaled down map segments similar to index card tabs do not exhibit exact scaling down of the original map but only the most important information for rough orientation.

10. Map according to one of the claims 7 to 9,
wherein the map segments similar to index card tabs exhibit a rectangular, scale form or other geometric shape.

11. Map according to one of the claims 7 to 10,
wherein the survey map is a visual component of the title page and/or the rear side of the map booklet or map book.

## Revendications

1. Mode de présentation de graphiques, illustrations, cartes géographiques et autres schémas d'ensemble et de détail au format livre ou cahier, **caractérisé en ce que** la vue d'ensemble est partagée en différentes sections ordonnées l'une à côté de l'autre et/ou l'une au-dessus ou au-dessous de l'autre, qu'à chacune de ces sections est annexée une vue en détail grossie, sous forme d'une page double, les sections représentant les vues en détail réduites étant ordonnées sur le haut de la moitié droite de chaque page double en haut et/ou sur le bas de la moitié gauche de chaque page double, en sorte que la distance de la section correspondante du haut à droite par rapport à la verticale de milieu de page double avec la vue en détail soit proportionnellement la même que la distance de la section par rapport à la limite gauche de la vue d'ensemble, et/ou que la distance de la section correspondante du bas à gauche par rapport à la ligne verticale de milieu de page double de la vue en détail soit proportionnellement la même que la distance de la section par rapport à la limite droite de la vue d'ensemble.

2. Mode de présentation selon revendication 1, **caractérisé en ce que** les vues en détail formées comme pages doubles, annexée aux sections ordonnées horizontalement côte à côte, sont toutes pliées et disposées l'une sur l'autre et l'une à la suite de l'autre, formant ainsi un empilement.

3. Mode de présentation selon revendication 1 ou 2, **caractérisé en ce que** les empilements sont disposés verticalement décalés l'un par rapport à l'autre.

4. Mode de présentation selon revendication 1, **caractérisé en ce que** la vue d'ensemble répartie en sections est totalement ou partiellement déformée, aplatie et/ou représentée en perspective.

5. Mode de présentation selon revendication 1 ou 2, **caractérisé en ce qu**'une réduction originale des vues en détail ou seules des informations sélectionnées des vues en détail sont représentées par la vue d'ensemble constituée par les sections.

6. Mode de présentation selon l'une des revendications 1, 2, 4 ou 5, **caractérisé en ce que** les sections sont en forme de rectangles et/ou se recouvrent partiellement par tuilage et/ou présentent une autre forme géométrique.

7. Carte géographique au format livre ou cahier, pour la présentation d'au moins une carte d'ensemble et de cartes détaillées annexées sous forme de pages doubles, **caractérisé en ce que,** pour chaque page double, au bord supérieur de la page droite du cahier ou du livre et/ou au bord inférieur de la page gauche du cahier ou du livre est disposée une découpure en forme de cavalier à fiche, représentant la section de cette page double sous forme fortement réduite, les découpures ordonnées horizontalement côte à côte se recouvrant exactement lorsque la carte est repliée, en formant un empilement, et les empilements formés en correspondance du nombre de sections ordonnées côte à côte sur l'axe vertical étant disposés en ligne décalés l'un par rapport à l'autre sur le dos de cahier ou de livre, et en ce que les découpures en forme de cavaliers à fiches au bord supérieur droit du cahier ou du livre soient aussi distantes proportionnellement de la verticale de milieu de cahier, que la section ouverte en forme de page double est distante du bord gauche de l'ensemble, et/ou que la découpure en forme de cavalier à fiche du bas à gauche soit également aussi distante proportionnellement de la verticale de milieu de cahier, que la section ouverte de carte en forme de page double est distante du bord droit de carte, et en ce que la disposition décalée l'une à côté de l'autre de ces découpures en forme de cavaliers permet de former une carte d'ensemble à échelle réduite, sur le bord supérieur avant et/ou inférieur arrière, dans l'état replié du cahier ou du livre.

8. Carte selon revendication 7, **caractérisée en ce que** les cartes d'ensemble à échelle réduite formées par la réunion des découpures en forme de cavaliers à fiches, sont totalement ou partiellement déformées, aplaties ou représentées en perspective et en ce que les découpures en forme de cavaliers à fiches ont une forme modifiée en conséquence.

9. Carte selon revendication 7 ou 8, **caractérisé en ce que** les cartes d'ensemble à échelle réduite formées par la réunion des découpures en forme de cavaliers à fiches, ne sont pas des réductions exactes de la carte originale, mais me foumissent que les informations majeures permettant une orientation générale.

10. Carte selon l'une des revendications 7 à 9, **caractérisé en ce que** les découpures en forme de cavaliers à fiches présentent une forme de rectangle, se recouvrent partiellement par tuilage, ou présentent une autre forme géométrique.

11. Carte selon l'une des revendications 7 à 10, **caractérisé en ce que** la carte d'ensemble est un élément visuel de la page de titre et/ou de la derrière page du cahier ou du livre.
